# FASCICULE DE BREVET EUROPEEN

(11) **EP 0 906 144 B1**
(45) Date de publication et mention de la délivrance du brevet: **05.04.2000**
(21) Numéro de dépôt: 97926076.7
(22) Date de dépôt: 02.06.1997
(51) Int. Cl.: B01D 21/00, B01D 21/01

(54) **INSTALLATION POUR LE TRAITEMENT DES EAUX ET BATTERIE D'EQUIPEMENTS MODULAIRES OBTENUES PAR LA MISE EN PARALLELE DE TELLES INSTALLATIONS**
ANLAGE ZUR ABWASSERBEHANDLUNG UND AUS SOLCHEN PARALLELANGEORDNETEN ANLAGEN HERGESTELLTE MODULARE ANORDNUNG
WATER TREATMENT PLANT AND SET OF MODULAR EQUIPMENT OBTAINED BY PLACING SUCH PLANTS IN PARALLEL

(30) Priorité: 17.06.1996 FR 9607500
(43) Date de publication de la demande: 07.04.1999
(73) Titulaire: DEGREMONT, 92508 Rueil-Malmaison Cédex (FR)
(72) Inventeur: VION, Patrick, F-78800 Houilles (FR)
(74) Mandataire: Armengaud Ainé, Alain
(86) Numéro de dépôt international: FR9700960
(87) Numéro de publication internationale: WO9748468

(56) Documents cités:
- WO-A-92/01636
- GB-A- 2 103 596

## Description

La présente invention concerne une installation pour le traitement des eaux et une batterie d'équipements modulaires de traitement d'eau, réalisée par la mise en parallèle d'une pluralité de telles installations.

On sait que les procédés physico-chimiques de traitement des eaux (notamment eaux de rivières et eaux souterraines pour la préparation d'eau potable, eaux industrielles, eaux résiduaires urbaines, eaux résiduaires industrielles, etc.) comportent plusieurs phases :
- la coagulation qui constitue la phase de neutralisation des colloïdes par adjonction de coagulants minéraux tels que des sels métalliques avec un temps de contact de l'ordre de 0,5 à 3 minutes ;
- la floculation qui est une phase d'agglomération des particules contenues dans l'eau brute et qui s'effectue en une ou plusieurs étapes par adjonction de floculants ou polyélectrolytes, en général à base de polymères organiques, avec un temps de contact ou de maturation de l'ordre de 4 à 30 minutes et,
- la séparation des particules solides dans un moyen de séparation pouvant être réalisé sous la forme d'un décanteur équipé ou non de modules lamellaires, dont le rôle est d'augmenter la vitesse de sédimentation desdites particules.

Dans de telles installations de type récent, les moyens de séparation sont généralement des décanteurs lamellaires. Le décanteur proprement dit présente en général un volume qui est nettement supérieur au volume nécessaire aux phases de coagulation-floculation. Ces décanteurs lamellaires peuvent être rectangulaires mais ils sont le plus souvent de forme carrée. Ils intègrent les modules lamellaires et ils comportent un système de raclage circulaire selon un cercle inscrit dans la surface du carré.

A ces décanteurs sont associés un certain nombre de problèmes que l'on peut ranger en deux ordres principaux : réalisation unitaire et mise en parallèle de plusieurs unités.

### Réalisation unitaire

### - Caractéristiques hydrauliques générales

Le réacteur de floculation, plus petit que le décanteur, n'alimente pas toujours (ou ne peut pas être conçu pour alimenter) le décanteur sur toute sa largeur. Il en résulte des flux hydrauliques hétérogènes, concentrés sur la partie centrale ou sur les côtés du décanteur et ces dissymétries de flux pénalisent la décantation en créant des turbulences dans une zone qui devrait être calme.

### - Décanteur carré avec raclage circulaire inscrit

Ce mode de réalisation très courant présente les inconvénients suivants :
- il est nécessaire de réaliser ce qu'il est convenu d'appeler des « bourrages », c'est-à-dire des garnissages en béton dans les angles inférieurs de l'ouvrage avec une pente supérieure à l'angle de talutage des boues (c'est-à-dire un angle supérieur à 50°) ceci afin d'éviter les zones stagnantes. De tels « bourrages » sont difficiles à réaliser et ils présentent parfois des hauteurs incompatibles avec la géométrie conventionnelle des ouvrages : ainsi, les « bourrages » à 60° d'un décanteur de 20 mètres de côté devraient s'élever à plus de 7 mètres de hauteur ;
- les rampes de nettoyage (par projection d'air ou d'eau ) fixées sur le tube d'entraînement du racleur circulaire ne permettent pas de nettoyer les modules lamellaires situés dans les angles du décanteur.

### - Décanteur circulaire avec modules lamellaires inscrits

Ces types de décanteur ne présentent pas les inconvénients des types précédemment décrits mais ils sont, a priori, plus difficiles à réaliser, surtout en béton et il est impossible de bénéficier de murs communs permettant éventuellement de disposer plusieurs décanteurs en parallèle.

### Mise en parallèles des unités

Une telle mise en parallèle doit résoudre les problèmes ci-après :

### - Débit d'alimentation

L'alimentation de plusieurs unités en parallèle nécessite des canaux ou des tubes de distribution de grande longueur (pouvant aller jusqu'à 100 mètres de long, voire davantage).

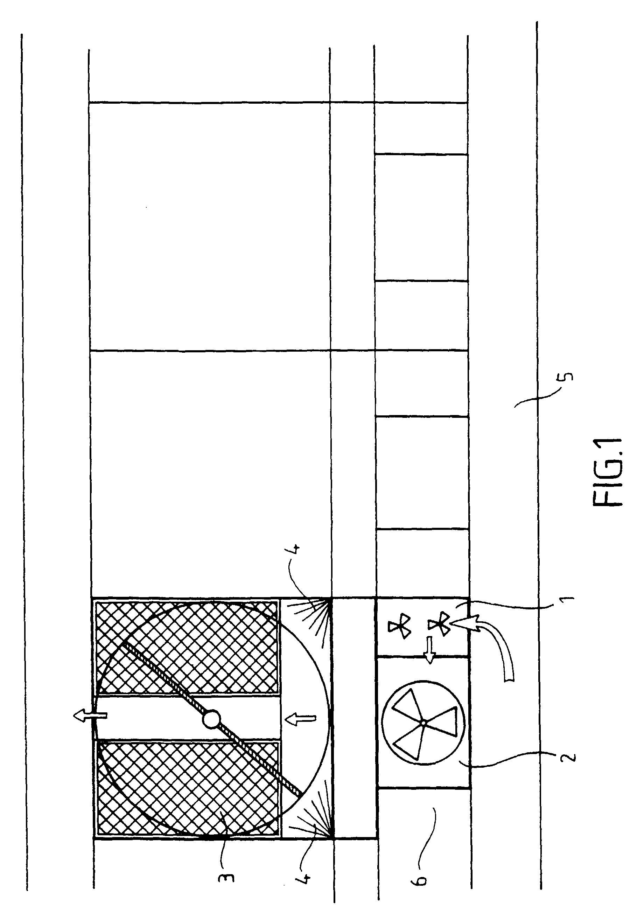

Sur la figure 1 des dessins annexés, on a représenté de façon schématique une installation classique mettant en parallèle un certain nombre d'équipements de traitement d'eau comprenant chacun un coagulateur 1, un floculateur 2, un décanteur 3. Sur cette figure, on voit en 4 les « bourrages » réalisés comme précisé ci-dessus dans les angles inférieurs du décanteur et en 5, le canal d'alimentation des différents équipements disposés en parallèle. Ce canal de distribution 5 constitue un élément critique de l'installation car il doit remplir deux fonctions antinomiques :
- la fonction de transfert qui doit s'effectuer à grande vitesse afin d'éviter les décantations de boues, de sable, etc... ; le problème peut être encore amplifié lorsque le dessablage n'est pas réalisé en amont des équipements, mais directement dans le coagulateur floculateur comme décrit dans FR-A-2, 679 223.
- la fonction de répartition : chaque appareil est en général alimenté par l'intermédiaire d'un déversoir calibré or, les pertes de charge le long du canal de distribution 5 amènent à calculer, pour chacun des déversoirs, des niveaux de seuil différents selon la position de ce déversoir au long du canal de distribution. Par ailleurs, la hauteur de seuil calculée pour un débit donné ne permet plus d'équilibrer les flux en cas de variations du débit total. Pour assurer une répartition acceptable, il faudrait alors limiter la vitesse de transfert dans le canal (ce qui est contradictoire avec les impératifs de non dépôt décrits dans l'alinéa précédent) ou encore augmenter notablement la hauteur d'eau sur le déversoir ce qui se traduit par un accroissement des dépenses en énergie.

### - Mise en oeuvre

- le montage en parallèle d'ouvrages unitaires de type parallélépipédique génère le plus souvent des zones perdues car inutilisables. Sur la figure 1 des dessins annexés, on voit en 6 une telle zone adjacente au floculateur 1 et au coagulateur 2.
- Il est difficile, voire impossible, et toujours coûteux de centraliser les moyens d'extraction des boues, des sables ou des graisses et de répartir les postes de distribution de réactifs, les instruments de mesure et de contrôle pour chaque décanteur, etc.

Afin de résoudre les problèmes ainsi mentionnés ci-dessus, en vue notamment de la réalisation de batteries d'équipements modulaires de traitement d'eau particulièrement compactes, l'invention apporte une installation pour le traitement notamment physico-chimique des eaux comportant des moyens de prétraitement tels que notamment des moyens de dessablage, de dégraissage, de prétraitement physico-chimique tel que de coagulation et de floculation et de prétraitement biologique, ainsi que des moyens de séparation des particules solides contenues dans l'eau brute caractérisée en ce que lesdits moyens de séparation solide-liquide sont inscrits dans un ouvrage de forme circulaire et les moyens d'alimentation en eau brute, ainsi qu'au moins l'un des moyens de prétraitement sont incorporés dans une structure en forme de triangle isocèle dont le sommet est situé sur un axe diamétral de l'ouvrage de forme circulaire contenant les moyens de séparation, dont les côtés sont constitués par les deux tangentes audit ouvrage circulaire, issues dudit sommet et dont la base est tangente audit ouvrage circulaire, au point d'intersection de cet ouvrage avec ledit axe diamétral.

Ainsi, l'invention permet d'inscrire l'ensemble moyens de séparation (notamment décanteur)-pré-traitements dans une figure géométrique ayant sensiblement la forme d'une goutte d'eau ou d'un pétale de fleur plus particulièrement d'une marguerite.

Selon un premier mode de réalisation de l'invention, les moyens de coagulation et de floculation sont incorporés dans ladite structure en forme de triangle isocèle.

Selon un second mode de réalisation de cette invention, les moyens de dessablage et de dégraissage sont incorporés dans ladite structure en forme de triangle isocèle.

Selon encore un autre mode de réalisation de l'invention, la structure en forme de triangle isocèle reçoit les moyens biologiques de traitement de l'eau.

Naturellement, et ainsi qu'on l'a mentionné ci-dessus, la structure en forme de triangle isocèle peut recevoir en totalité ou en partie les différents moyens de prétraitement notamment physico-chimiques et biologiques.

Selon l'invention, les moyens de séparation peuvent être constitués par des décanteurs, notamment de type lamellaire, cependant ces décanteurs peuvent être remplacés par des séparateurs de type hydrocyclone, ou bien encore par des systèmes de flottation ou de filtration.

On notera que, selon les fonctions de prétraitement, notamment physico-chimiques ou biologiques, devant être réalisées dans cette installation, incorporées dans ledit triangle isocèle (dessablage, dégraissage, coagulation, floculation, double neutralisation, etc.) la surface de ce triangle sera, selon l'invention, définie proportionnellement aux temps de contact nécessaires, selon les connaissances de l'homme du métier, et on déterminera ainsi la hauteur du triangle et donc la valeur de son angle au sommet, cette méthode de dimensionnement étant valable pour un diamètre donné du système de séparation, notamment du décanteur. On admet en première approximation que le diamètre du décanteur proprement dit est sensiblement constant pour un même débit d'eau.

Ainsi qu'on l'a précisé ci-dessus, l'invention permet de réaliser des batteries d'équipements modulaires de traitement d'eau obtenues par une mise en parallèle d'une pluralité de modules constitués chacun d'une installation du type défini ci-dessus, la configuration de ladite batterie présentant l'aspect d'une fleur dont chaque pétale est constitué par un module, l'alimentation, commune à chaque module, étant située en position centrale au centre de ladite fleur.

Selon la présente invention, les différents modules constituant une batterie sont accolés en mettant en commun le ou les murs de la structure de chaque module en forme de triangle isocèle, tangents à la structure circulaire dudit module contenant les moyens de séparation, le nombre maximum de modules pouvant être mis en parallèle étant égal à 360/Δ, Δ étant l'angle au sommet dudit triangle isocèle, la configuration de la batterie ainsi réalisée étant celle d'une marguerite.

D'autres caractéristiques et avantages de la présente invention ressortiront de la description faite ci-après en référence aux dessins annexés qui en illustrent un exemple de réalisation dépourvu de tout caractère limitatif.

Sur les dessins :
- La figure 1 est une vue schématique en plan illustrant l'état antérieur de la technique, discuté ci-dessus, relative à la disposition en parallèle d'équipements modulaires classiques de traitement d'eaux.
- La figure 2 est une vue schématique en plan d'un mode de réalisation d'une installation selon la présente invention,
- La figure 3 représente en une vue plus détaillée une installation conforme à celle représentée schématiquement à la figure 2.
- La figure 4 est une vue en coupe par un plan diamétral vertical de la figure 3 et,
- La figure 5 est une vue schématique en plan similaire à la figure 2 illustrant une variante de l'installation selon la présente invention.

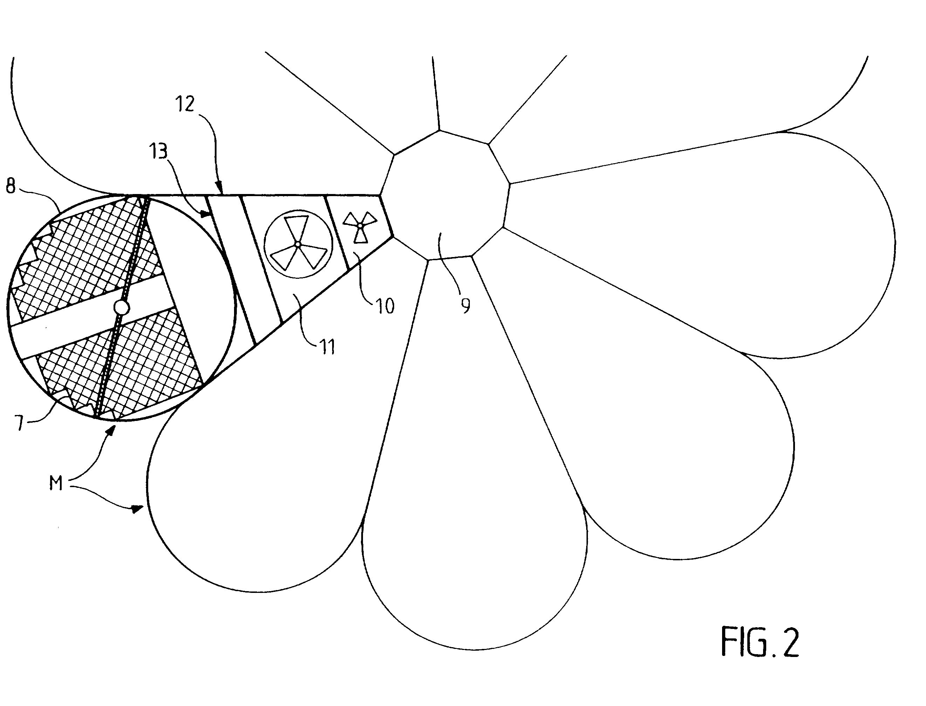

En se référant à la figure 2, on voit que dans chaque module M de l'installation selon l'invention, les moyens de séparation qui dans cet exemple de réalisation sont réalisés sous la forme d'un décanteur lamellaire 7 sont inscrits dans un ouvrage circulaire 8 et que les structures d'alimentation 9, de coagulation 10 et de floculation 11 sont inscrites dans un triangle isocèle désigné par la référence 12 dont le sommet se situe sur un axe diamétral du cercle de l'ouvrage 8. Comme on le voit sur la figure 2, les côtés de ce triangle isocèle 12 sont constitués par les deux tangentes au cercle 8 issues dudit sommet et la base 13 de ce triangle isocèle est tangente au cercle de l'ouvrage 8, au point d'intersection de ce cercle avec ledit axe diamétral.

Sur la figure 2, on a représenté de façon schématique, les autres modules M constituant l'installation selon l'invention, chaque module présentant la forme d'une goutte d'eau ou d'un pétale de fleur notamment de marguerite. Selon l'invention, et ainsi qu'on le décrira ci-après, on peut disposer en parallèle le nombre voulu de modules de type M.

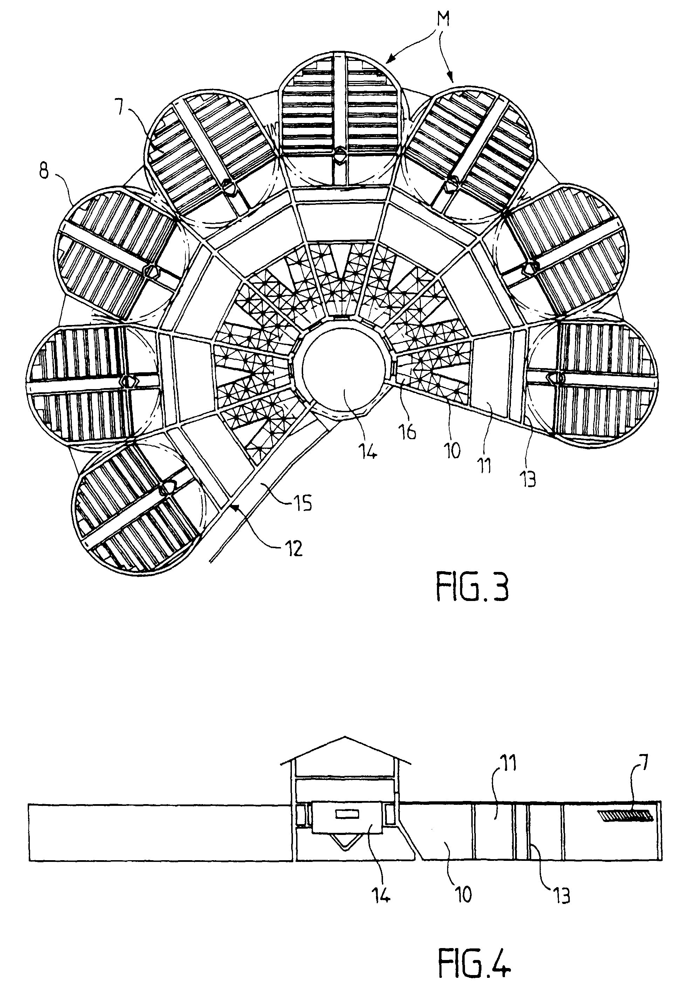

On notera que ce type d'équipements, multicellulaire, permet de mettre en oeuvre des systèmes d'alimentation et de répartition spécifiques particulièrement avantageux lorsque deux décanteurs ou plus sont disposés en parallèle. Ces systèmes d'alimentation et de répartition peuvent être réalisés sous la forme d'une cuve cylindrique 14 (figure 3) alimentée axialement ou tangentiellement (canal d'alimentation 15), et équipée de moyens de répartition hydrauliques 16 sur chaque module M.

On comprend de la lecture de la description qui précède et de l'examen des figures 2 et 3 que la géométrie selon l'invention de chacun des modules, ou unités de traitement d'eau M facilite grandement leur mise en parallèle :
- Il est possible, selon l'invention, d'accoler les modules ou unités M en mettant en commun le (ou les) murs tangents à chaque décanteur circulaire tel que 7 (cette disposition est celle illustrée par les figures 2 et 3) . Si l'angle au sommet est égal à Δ°, le nombre maximum de modules ou d'unités de traitement M qui pourront être installés en parallèle sera de 360 / Δ. La configuration résultant de cet arrangement ressemble à une marguerite, ainsi qu'on l'a déjà précisé ci-dessus.
- l'alimentation 9 (figure 2) ou 14 (figure 3) commune à tous les décanteurs 7 est située en position centrale, c'est-à-dire au « coeur de la marguerite », ce qui procure l'avantage majeur de supprimer le long canal de distribution 5 des installations selon la technique antérieure discutée ci-dessus en référence à la figure 1.
- du fait de l'absence de perte de charge en ligne, résultant de la suppression d'un tel canal longitudinal de distribution, tous les moyens de répartition sont calés sur un même plan horizontal et ils permettent d'assurer une hauteur de lame d'eau constante à l'entrée de chaque décanteur ; on surmonte par là même les hétérogénéités de répartition constatées lors des variations de débit, dans le cas de l'alimentation par canal longitudinal.
- les risques de dépôt évoqués ci-dessus, « fonction de transfert » sont pratiquement supprimés et, en toute éventualité, facilement maîtrisables compte-tenu du caractère compact de l'ouvrage de répartition et de sa forme circulaire (possibilité de soutirage, voire de raclage).
- la zone centrale d'alimentation 9 (figure 2) ou 14 (figure 3) (coeur de la marguerite) permet de superposer plusieurs équipements communs aux unités ou modules M ainsi assemblés en parallèle et entres autres :
- le système de répartition
- l'ensemble des pompes à boues ou à sable (localisation au niveau inférieur) ;
- les postes de dosage de réactifs ;
- les systèmes de contrôle, de commande et de gestion des ouvrages.

Ainsi, la mise en oeuvre et l'exploitation des installations périphériques sont considérablement simplifiées en raison du regroupement de toutes ces fonctions en position centrale.

Selon la présente invention, et ainsi qu'on l'a déjà précisé ci-dessus, les décanteurs peuvent présenter une forme carrée, rectangulaire ou circulaire, l'essentiel étant qu'ils restent inscriptibles dans un cercle et/ou qu'ils soient accolés à la base du triangle isocèle 12 décrit ci-dessus. Ces décanteurs peuvent être de type quelconque avec ou sans modules lamellaires. Ils peuvent être remplacés par des séparateurs de type hydrocyclone ou bien encore par des systèmes de flottation ou des moyens de filtration.

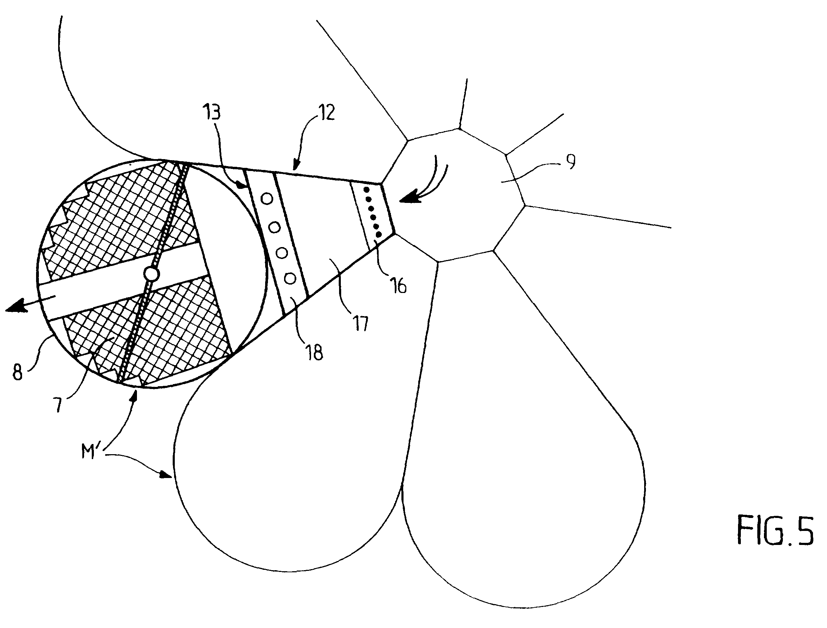

Bien entendu, l'invention peut être appliquée à une installation mettant en oeuvre dans un même équipement, (FR-A- 2, 679, 223) des procédés qui réalisent le dessablage, le dégraissage et les traitement physico-chimiques avec décantation lamellaire des eaux résiduaires urbaines et/ou industrielles, l'invention est également applicable aux appareils réalisant le dessablage, le dégraissage et la décantation lamellaire (sans addition de réactifs) des eaux résiduaires urbaines et/ou industrielles. Cette variante de l'invention est illustrée par la figure 5. Dans cette variante, les moyens de séparation, réalisés, dans cet exemple qui n'a bien entendu aucun caractère limitatif, par un décanteur lamellaire 7 sont inscrits dans l'ouvrage 8 de forme circulaire de chaque module M', de la même façon que décrit précédemment et les moyens d'alimentation 16 sur lesquels débouchent les moyens de distribution centrale 9, ainsi que les moyens de dessablage 17 et les moyens de dégraissage 18 sont incorporés dans la structure en forme de triangle isocèle 12 comme décrit précédemment.

Le système de mise en parallèle d'unités ou de modules de traitement d'eaux M,M' tel que décrit ci-dessus peut s'appliquer avantageusement :
- à tous types de décanteurs lamellaires ou conventionnels mettant en oeuvre un ou plusieurs procédés physico-chimiques ou biologiques, comportant ou non un recyclage des boues, une injection d'alourdisseurs (FR-A- 2 720 736, FR-A- 2 719 235) et couvrant tous les procédés du traitement de l'eau tels que clarification, décarbonatation par précipitation, neutralisation, précipitation sélective, etc... ;
- à divers autres procédés physico-chimiques, voire biologiques, faisant ou non intervenir la séparation solide-liquide par tout procédé approprié, tel que notamment décantation, flottation, filtration, cyclonage, etc..., cette énumération n'étant pas limitative.

A tous procédés physico-chimiques ou biologiques, mettant en jeu un ou plusieurs réacteurs pouvant être inscrits dans un triangle tel que décrit précédemment et comportant ou non des moyens de séparation solide-liquide positionnés en aval des moyens mettant en oeuvre lesdits procédés physico-chimiques ou biologiques.

Parmi les avantages apportés par la présente invention, et résultant notamment de l'aspect unitaire des installations qu'elle permet de réaliser grâce aux modules , on peut citer notamment :
- la forme circulaire de l'ouvrage recevant les moyens de séparation solide-liquide (notamment le décanteur décrit ci-dessus) qui permet :
- la suppression de deux des quatre « bourrages » d'angle par rapport aux décanteurs classiques à section carrée ou rectangulaire ;
- une réduction très notable du volume des deux « bourrages » restant ;
- la mise en oeuvre d'un dispositif de nettoyage des modules lamellaires par une rampe d'injection d'air ou d'eau, solidaire, tant pour sa fixation que pour son alimentation, du tube d'entraînement du racleur ;
- la géométrie sensiblement triangulaire de la structure 12 dans laquelle sont insérés les moyens de prétraitement notamment physico-chimiques et/ou biologiques, par exemple le coagulateur 10 et le floculateur 11 (ou toute autre fonction de prétraitement) améliore notablement la répartition de l'alimentation hydraulique du système de séparation solide-liquide, notamment du décanteur. En effet, le transfert entre la zone d'alimentation 9 ou 14 et le décanteur 7 s'effectue sans aucune variation brutale de section hydraulique, sur 100% de la largeur des ouvrages, assurant ainsi un étalement régulier et progressif du flux hydraulique sur toute cette surface, l'homogénéité des flux permettant par ailleurs d'optimiser l'exploitation des différentes fonctions physico-chimiques de traitement.

## Revendications

1. Installation pour le traitement des eaux comportant des moyens de prétraitement tels que notamment des moyens de dessablage, de dégraissage, de prétraitement physico-chimique tel que de coagulation et de floculation et de prétraitement biologique, ainsi que des moyens de séparation des particules solides contenues dans l'eau brute caractérisée en ce que lesdits moyens de séparation solide-liquide (7) sont inscrits dans un ouvrage de forme circulaire (8) et les moyens d'alimentation en eau brute (9, 14) ainsi qu'au moins l'un des moyens de prétraitement (10, 11, 17, 18) sont incorporés dans une structure en forme de triangle isocèle (12) dont le sommet est situé sur un axe diamétral de l'ouvrage de forme circulaire (8) contenant les moyens de séparation (7), dont les côtés sont constitués par les deux tangentes audit ouvrage circulaire, issues dudit sommet et dont la base (13) est tangente audit ouvrage circulaire, au point d'intersection de cet ouvrage avec ledit axe diamétral.

2. Installation selon la revendication 1 caractérisée en ce que, les moyens de coagulation (10) et les moyens de floculation (11) sont incorporés dans ladite structure en forme de triangle isocèle (12).

3. Installation selon la revendication 1 caractérisé en ce que, les moyens de dessablage et les moyens de dégraissage sont incorporés dans ladite structure en forme de triangle isocèle (12).

4. Installation selon la revendication 1 caractérisée en ce que ladite structure en forme de triangle isocèle reçoit les moyens biologiques de prétraitement.

5. Installation selon l'une quelconque des revendications précédentes caractérisée en ce que lesdits moyens de séparation (7) sont constitués par des décanteurs.

6. Installation selon la revendication 5 caractérisée en ce que lesdits décanteurs sont du type lamellaire.

7. Installation selon l'une quelconques des revendications 1 à 4 caractérisée en ce que lesdits moyens de séparation (7) sont constitués d'hydrocyclones.

8. Installation selon l'une quelconque des revendications 1 à 4 caractérisée en ce que lesdits moyens de séparation sont constitués par des systèmes de flottation.

9. Installation selon l'une quelconque des revendications 1 à 4 caractérisée en ce que lesdits moyens de séparation sont constitués par des moyens de filtration.

10. Installation selon l'une quelconque des revendications précédentes caractérisée en ce que la surface dudit triangle isocèle (12) est définie en fonction des temps de contact nécessaires aux traitements réalisés par les différents moyens, notamment de coagulation et de floculation, inscrits dans ledit triangle.

11. Installation selon l'une des revendications 5 ou 6 caractérisée en ce que les décanteurs présentent une forme carrée, rectangulaire ou circulaire.

12. Batterie d'équipements modulaires de traitement d'eau caractérisée en ce qu'elle est réalisée par une mise en parallèle d'une pluralité de modules (M, M') constitués chacun d'une installation selon l'une quelconque des revendications précédentes, la configuration de ladite batterie ayant l'aspect d'une fleur dont chaque pétale est constitué par un module (M,M'), l'alimentation (9, 14) commune à chaque module étant située en position centrale au coeur de ladite fleur.

13. Batterie d'équipements modulaires selon la revendication 12 caractérisée en ce que les différents modules (M,M') sont accolés en mettant en commun le ou les murs de la structure en forme de triangle isocèle (12) tangents à la structure circulaire (8) contenant les moyens de séparation (7), le nombre maximum de modules pouvant être mis en parallèle étant égal à 360/Δ, Δ étant l'angle au sommet dudit triangle isocèle (12), la configuration de la batterie étant alors celle d'une marguerite complète.

14. Batterie d'équipements modulaires selon l'une quelconque des revendications 12 ou 13 caractérisée en ce que la zone centrale d'alimentation (9, 14) reçoit une superposition d'équipements communs aux différents modules (M,M') notamment : le système de répartition, l'ensemble des pompes à boue ou à sable, les postes de dosage de réactifs, les différents systèmes de contrôle, de commande et de gestion des modules.

15. Batterie d'équipements modulaires selon l'une quelconque des revendications 12 à 14 caractérisée en ce que les moyens d'alimentation (9, 14) des différents modules (M,M') sont réalisés sous la forme d'une cuve cylindrique alimentée axialement ou tangentiellement par un canal (15) et équipée de moyens de répartition du flux hydraulique sur chaque module (M,M').

## Claims

1. Installation for the treatment of water having pretreatment means such as in particular sand removal means, grease removal means, physicochemical pretreatment means, such as coagulation, flocculation and biological pretreatment means, as well as means for separating solid particles contained in the untreated water, characterized in that said solid-liquid separation means (7) are inscribed in a circular element (8) and untreated water supply means (9, 14), as well as at least one of the pretreatment means (10, 11, 17, 18) are incorporated into an isosceles triangle-shaped structure (12), whose apex is located on a diametrical axis of the circular element (8) containing the separation means (7), whose sides are constituted by the two tangents to said circular element, coming from the said apex and whose base (13) is tangential to said circular element, at the intersection point of said element with said diametrical axis.

2. Installation according to claim 1, characterized in that the coagulation means (10) and the flocculation means (11) are incorporated into isosceles triangle-shaped structure (12).

3. Installation according to claim 1, characterized in that the sand removal means and the grease removal means are incorporated into said isosceles triangle-shaped structure (12).

4. Installation according to claim 1, characterized in that said isosceles triangle-shaped structure receives the biological pretreatment means.

5. Installation according to any one of the preceding claims, characterized in that said separation means (7) are constituted by decanters.

6. Installation according to claim 5, characterized in that said decanters are of the lamellar type.

7. Installation according to any one of the claims 1 to 4, characterized in that said separation means (7) are constituted by hydrocyclones.

8. Installation according to any one of the claims 1 to 4, characterized in that said separation means are constituted by floatation systems.

9. Installation according to any one of the claims 1 to 4, characterized in that said separation means are constituted by filtration means.

10. Installation according to any one of the preceding claims, characterized in that the surface of said isosceles triangle (12) is defined as a function of the contact times necessary for the treatments performed by the different means, particularly the coagulation and flocculation treatments, inscribed in said triangle.

11. Installation according to one of the claims 5 or 6, characterized in that the decanters are square, rectangular or circular.

12. Battery of modular water treatment equipments, characterized in that it is obtained by the arrangement in parallel of a plurality of modules (M, M'), each constituted by an installation according to any one of the preceding claims, the configuration of said battery having the appearance of a flower, whereof each petal is constituted by a module (M, M'), the common supply (9, 14) for each module being located in a position in the centre of said flower.

13. Battery of modular equipments according to claim 12, characterized in that the different modules (M, M') are juxtaposed by the sharing of the wall or walls of the isosceles triangle-shaped structure (12) tangential to the circular element (8) containing the separation means (7), whereby the maximum number of modules which can be brought into parallel is 360/Δ, Δ being the apex angle of said isosceles triangle (12), the configuration of the battery then being that of a complete daisy.

14. Battery of modular equipments according to either of the claims 12 and 13, characterized in that the central supply zone (9, 14) receives a superimposition of equipments common to the different modules (M, M') and in particular the distribution system, the sludge or mud pump assembly, the reagent dosing stations, the different control, checking and management systems for the modules.

15. Battery of modular equipments according to any one of the claims 12 to 14, characterized in that the supply means (9, 14) of the different modules (M, M') are implemented in the form of a cylindrical vessel supplied axially or tangentially by a channel (15) and equipped with means for distributing the hydraulic flow on each module (M, M').

## Patentansprüche

1. Vorrichtung zur Wasseraufbereitung, welche Mittel für die Vorbehandlung wie insbesondere Mittel für das Abscheiden von Sand und Fett, die physikochemische Vorbehandlung wie Koagulation und Flockung und die biologische Vorbehandlung sowie Mittel für das Abscheiden von im Rohwasser enthaltenen festen Teilchen umfaßt, **dadurch gekennzeichnet, daß** die Mittel (7) für die Fest-Flüssig-Trennung in einem runden Becken (8) einbeschrieben sind und die Mittel (9, 14) für den Zulauf des Rohwassers sowie mindestens eines der Vorbehandlungsmittel (10, 11, 17, 18) in eine Konstruktion (12) mit der Form eines gleichschenkligen Dreiecks eingebaut sind, dessen Spitze sich auf einer Durchmesserachse des die Trennmittel (7) enthaltenden runden Beckens (8) befindet und dessen Seiten von den beiden Tangenten an dem runden Becken gebildet werden, die von der Spitze kommen, und dessen Basis (13) das runde Becken im Schnittpunkt dieses Beckens mit der Durchmesserachse tangiert.

2. Vorrichtung nach Anspruch 1, **dadurch gekennzeichnet, daß** die Koagulationsmittel (10) und die Flockungsmittel (11) in die Konstruktion (12) mit der Form eines gleichschenkligen Dreiecks eingebaut sind.

3. Vorrichtung nach Anspruch 1, **dadurch gekennzeichnet, daß** die Mittel für die Sandabscheidung und die Mittel für die Fettabscheidung in die Konstruktion (12) mit der Form eines gleichschenkligen Dreiecks eingebaut sind.

4. Vorrichtung nach Anspruch 1, **dadurch gekennzeichnet, daß** die Konstruktion mit der Form eines gleichschenkligen Dreiecks die Mittel für die biologische Vorbehandlung aufnimmt.

5. Vorrichtung nach einem der vorhergehenden Ansprüche, **dadurch gekennzeichnet, daß** die Trennmittel (7) aus Abscheidern bestehen.

6. Vorrichtung nach Anspruch 5, **dadurch gekennzeichnet, daß** die Abscheider lamellar sind.

7. Vorrichtung nach einem der Ansprüche 1 bis 4, **dadurch gekennzeichnet, daß** die Trennmittel (7) aus Hydrozyklonen bestehen.

8. Vorrichtung nach einem der Ansprüche 1 bis 4, **dadurch gekennzeichnet, daß** die Trennmittel aus Flotationssystemen bestehen.

9. Vorrichtung nach einem der Ansprüche 1 bis 4, **dadurch gekennzeichnet, daß** die Trennmittel aus Filtrationsmitteln bestehen.

10. Vorrichtung nach einem der vorhergehenden Ansprüche, **dadurch gekennzeichnet, daß** die Fläche des gleichschenkligen Dreiecks (12) in Abhängigkeit von der Kontaktzeit festgelegt wird, die jeweils für die Behandlungen, insbesondere Koagulation und Flockung, welche durch die in diesem Dreieck einbeschriebenen verschiedenen Mittel durchgeführt werden, erforderlich ist.

11. Vorrichtung nach Anspruch 5 oder 6, **dadurch gekennzeichnet, daß** die Form der Abscheider quadratisch, rechteckig oder rund ist.

12. Batterie modularer Ausrüstungen zur Wasseraufbereitung, **dadurch gekennzeichnet, daß** sie durch Parallelschaltung einer Vielzahl von Modulen (M, M') realisiert wird, die jeweils aus einer Vorrichtung nach einem der vorhergehenden Ansprüche bestehen, wobei die Gestalt der Batterie das Aussehen einer Blume hat, deren Blütenblätter jeweils aus einem Modul (M, M') bestehen, und sich der allen Modulen gemeinsame Zulauf (9, 14) in zentraler Position in der Mitte der Blume befindet.

13. Batterie modularer Ausrüstungen nach Anspruch 12, **dadurch gekennzeichnet, daß** die verschiedenen Module (M, M') miteinander verbunden sind, indem die Wand/Wände der Konstruktion (12) mit der Form eines gleichschenkligen Dreiecks, welche die die Trennmittel (7) enthaltende runde Konstruktion (8) tangieren, gemeinsam genutzt wird/werden, wobei die maximale Anzahl der Module, die gleichzeitig angeordnet werden können, gleich 360/Δ ist, wobei Δ der Winkel in der Spitze des gleichschenkligen Dreiecks (12) und die Gestalt der Batterie dann die einer vollständigen Margerite ist.

14. Batterie modularer Ausrüstungen nach Anspruch 12 oder 13, **dadurch gekennzeichnet, daß** die zentrale Zulaufzone (9, 14) übereinander angeordnete Ausrüstungen, die den verschiedenen Modulen (M, M') gemeinsam sind, insbesondere das Verteilungssystem, die Gruppe von Schlamm- oder Sandpumpen, die Dosierstationen für die Reaktanden und die verschiedenen Systeme zur Kontrolle, Regelung und Steuerung der Module, aufnimmt.

15. Batterie modularer Ausrüstungen nach einem der Ansprüche 12 bis 14, **dadurch gekennzeichnet, daß** die Zulaufmittel (9, 14) für die verschiedenen Module (M, M') in Form eines zylindrischen Behälters realisiert sind, der axial oder tangential durch einen Kanal (15) versorgt wird und mit Mitteln zur Verteilung des hydraulischen Flusses auf alle Module (M, M') ausgestattet ist.
